# EUROPÄISCHE PATENTANMELDUNG

(11) **EP 1 632 379 A1**
(43) Veröffentlichungstag der Anmeldung: **08.03.2006**
(21) Anmeldenummer: 04104260.7
(22) Anmeldetag: 03.09.2004
(51) Int. Cl.: B60K 15/04

(54) **Einsatz für ein Einfüllrohr**

(71) Anmelder: Ford Global Technologies, LLC, A subsidary of Ford Motor Company, Dearborn, MI 48126 (US)
(72) Erfinder: Buro, Stefan, 50765, Köln (DE)
(74) Vertreter: Drömer, Hans-Carsten

(57) **Zusammenfassung**

Die Erfindung bezieht sich auf einen Einsatz 10 für den Einbau in ein endseitig eine Aufnahme für z.B. einen Verschlußstopfen aufweisendes Einfüllrohr z.B. für einen Treibstofftank, mit Mitteln 11 zur selektiven Aufnahme des Mundrohres z.B. einer Zapfpistole, mit einer in den durchmesserreduzierbar ausgebildeten Öffnungsbereich 12 des Einsatzes 10 schwenkbaren Erdungs- Klappeneinrichtung 13, mit einer Einrichtung 14 zur Entlüftung des zu befüllenden Tankes, mit Mitteln 15 zur Steuerung der Einführbewegung des Einsatzes in das Einfüllrohr, mit Mitteln 16 zur Begrenzung der Einführbewegung des Einsatzes 10 in das Einfüllrohr und mit Mitteln 17 zum Festlegen desselben in diesem Einfüllrohr. Es ist dabei erfindungsgemäß vorgesehen, daß der Einsatz 10 als ein mit wenigstens zwei möglichen unterschiedlichen Bohrungsdurchmessern ausgestatteter Einsatz 10 insbesondere aus Plastik ausgebildet ist, mit einem in dem Öffnungsbereich 12 befestigten, mit der schwenkbaren Erdungs- Klappeneinrichtung 13 in Wirkverbindung stehenden, durchmesserreduzierenden Führungselement 18 für das Mundrohr, und daß der Einsatz 10 mit Mitteln 19 zu seiner translatorischen Einführung in das Einfüllrohr, mit Anschlagmitteln 20 und mit Mitteln 21 zum Arretieren desselben in diesem Einfüllrohr versehen ist.

## Beschreibung

Die Erfindung bezieht sich auf einen Einsatz für den Einbau in ein endseitig eine Aufnahme für z. B. einen Verschlußstopfen aufweisendes Einfüllrohr z. B. für einen Treibstofftank, mit Mitteln zur selektiven Aufnahme des Mundrohres z. B. einer Zapfpistole, mit einer in den durchmesserreduzierbar ausgebildeten Öffnungsbereich des Einsatzes schwenkbaren Erdungs- Klappeneinrichtung, mit einer Einrichtung zur Entlüftung des zu befüllenden Tankes, mit Mitteln zur Steuerung der Einführbewegung des Einsatzes in das Einfüllrohr, mit Mitteln zur Begrenzung der Einführbewegung des Einsatzes in das Einfüllrohr und mit Mitteln zum Festlegen desselben in diesem Einfüllrohr.

Aus dem Stand der Technik sind verschiedene Einsätze für den Einbau in oder an ein Einfüllrohr z. B. für einen Treibstofftank bekannt. Es ergibt sich dabei grundsätzlich das Erfordernis, den Öffnungsbereich des Einsatzes durchmesserreduzierbar auszubilden, so daß z. B. ein Einführen eines Mundrohres mit einem großen Durchmesser in das Einfüllrohr und dadurch eine falsche Tankbefüllung vermieden werden kann. Es wird dieses Erfordernis bei einer Reihe von bekannten Einsätzen durch eine Kombination mit einer Erdungs-Klappeneinrichtung erreicht, wobei diese Erdungs- Klappeneinrichtung das Mundrohr während der Befüllung berührt. Die Standard- Lösung für ein metallisches Einfüllrohr besteht aus einem auf das Rohrende aufsetzbaren Plastik- Aufsatz, der beide Funktionen gleichzeitig erfüllt und das Gewinde für den Verschlußstopfen trägt. Diese Aufsätze sind großvolumig und kostenaufwendig, weil sie u.a. eine zusätzliche Abdichtung zwischen Plastik- Aufsatz und Einfüllrohr erfordern.

Aus dem Stand der Technik sind ferner Einsätze für Einfüllrohre mit integrierten, von außen nicht sichtbaren Füllrohr- Einsätzen mit Mitteln zur selektiven Aufnahme des Mundrohres z. B. einer Zapfpistole bekannt, es sei dazu beispielhaft auf die AT 005 686 U1 verwiesen. Es bezieht sich diese Druckschrift auf ein Füllrohr für einen Treibstofftank mit einem erweiterten Gehäuse für die Aufnahme eines Verschlußstopfens, das einen Einsatz mit einem Kragen zur selektiven Aufnahme des Mundrohres einer Zapfpistole enthält. Dieses Füllrohr für einen Treibstofftank soll dabei insbesondere qualitativ, sowie hinsichtlich Herstellungs- und Logistikkosten und Austauschbarkeit verbessert werden. Dazu hat das Gehäuse an seinem inneren Umfang eine Anzahl einwärts gerichteter Gewindesegmente und mindestens eine vertikale Eindrückung, weist der obere Teil des Gehäuses segmentierte Gewindeteile zum Einschrauben des Verschlußstopfens auf und sein unterer auf den Durchmesser des Füllrohres zusammengezogener Teil enthält einen Einsatz. Dieser Einsatz hat an seinem äußeren Umfang eine Anzahl auswärts gerichteter Gewindesegmente und zwei auswärts gerichtete Nasen, wobei die Gewindesegmente mit den einwärts gerichteten Gewindesegmenten des Gehäuses den Einsatz in Längsrichtung halten und die beiden Nasen mit der mindestens einen Eindrückung eine Verdrehsicherung bilden.

Es wird also bei dieser Anordnung davon abgegangen, das Gewinde für den Verschlußstopfen, das in der Regel ein Innengewinde ist, am Einsatz auszubilden. Dadurch wird die Abdichtung zwischen Gehäuse und Einsatz eingespart. Die Gewindesegmente, Nasen und Eindrückungen sollen einfach und mit guter Genauigkeit zu fertigen sein. Die Gewindesegmente erlauben das Einführen des Einsatzes in die Tiefe des Gehäuses ohne Verdrehung und geben in der Folge eine bajonettartige Verbindung mit dem Gehäuse. Die Nasen dienen der Verdrehsicherung, sobald der Einsatz beim Verdrehen seine Endstellung erreicht hat. So ist sichergestellt, daß sich die Verbindung nicht löst, etwa durch Erschütterungen. Trotzdem ist der Einsatz, oder eine der vielen länderspezifischen Varianten des Einsatzes, sehr einfach und ohne Kraftanstrengung auch erst bei der späteren Endmontage im Fahrzeug einsetzbar und später austauschbar.

In bevorzugter Ausgestaltung dieser Anordnung bildet eine der beiden Nasen eine elastisch eindrückbare Klinke und die andere einen Anschlag, welche jeweils mit der mindestens einen vertikalen Eindrückung zusammenwirkt. Bei Erreichen der Endstellung wird zuerst über die zurückweichende Klinke hinweggedreht, bis sie einschnappt, gleichzeitig ist auch der Anschlag erreicht. Da die Eindrückungen sich in Längsrichtung erstrecken und nur ihre Umfangsstellung genau bestimmt sein muß, sind diese beim Ziehen des aus Blech bestehenden Gehäuses sehr leicht mitzuformen. Noch besser ist es dabei, wenn zwei einander gegenüberliegende Eindrückungen vorgesehen sind, wovon eine mit der Klinke und die andere mit dem Anschlag zusammenwirkt.

Bei dieser Anordnung nach der AT 005 686 U1 ist an sich von Vorteil, daß insbesondere keine zusätzlichen Abdichtungselemente zwischen Einsatzelement und Einfüllrohr erforderlich sind, wünschenswert ist es allerdings, diese Anordnung weiterhin insbesondere bezüglich des Aufbaus, des Einbaus bzw. der Austauschbarkeit des Einsatzes zu vereinfachen und dadurch zu verbessern.

Ausgehend von diesen bekannten Einsätzen für den Einbau in oder an ein Einfüllrohr z. B. für einen Treibstofftank liegt der Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, wobei insbesondere eine Vereinfachung des Aufbaus, des Einbaus bzw. der Austauschbarkeit des Einsatzes erreicht werden soll. Die gewünschte Anordnung soll dabei aber nicht nur einfach und kostengünstig herstellbar sein, mit einer einfachen Möglichkeit des Einbaus bzw. der Austauschbarkeit des Einsatzes, sondern die gewünschte Anordnung soll auch hinsichtlich der Funktionseigenschaften, der Zuverlässigkeit und der Lebensdauer den bestehenden Anforderungen entsprechen.

Diese Aufgabe wird erfindungsgemäß dadurch gelöst, daß der Einsatz als ein mit wenigstens zwei möglichen unterschiedlichen Bohrungsdurchmessern ausgestatteter Einsatz insbesondere aus Plastik ausgebildet ist, mit einem in dem Öffnungsbereich befestigten, mit der schwenkbaren Erdungs- Klappeneinrichtung in Wirkverbindung stehenden, durchmesserreduzierenden Führungselement für das Mundrohr, und daß der Einsatz mit Mitteln zu seiner translatorischen Einführung in das Einfüllrohr, mit Anschlagmitteln und mit Mitteln zum Arretieren desselben in diesem Einfüllrohr versehen ist. Auf diese Weise wird erstmalig mit einfachen Mitteln die Möglichkeit geschaffen, die Nachteile der zuvor bekannten Lösungen zu vermeiden, wobei insbesondere der Aufbau, der Einbau und die Austauschbarkeit des Einsatzes wesentlich vereinfacht und dadurch auch wesentlich verbessert wird. Der als ein mit wenigstens zwei möglichen unterschiedlichen Bohrungsdurchmessern ausgestatteter Einsatz insbesondere aus Plastik ausgebildete Einsatz für ein Einfüllrohr mit einem in dem Öffnungsbereich befestigten durchmesserreduzierenden Führungselement für das Mundrohr ist gegenüber den zuvor bekannten Lösungen wesentlich kostengünstiger, wobei insbesondere durch die Einsparung zusätzlicher Abdichtungselemente zwischen Einsatzelement und Einfüllrohr Kosten gespart werden. Weiterhin wird gegenüber bekannten durchmesserreduzierenden Führungselementen aus Metall der Vorteil erreicht, daß bei diesen Ausführungen im Vergleich die technische Ausführbarkeit sehr schwierig ist, außerdem sehen diese Anordnungen nicht die Möglichkeit vor, eine Auswahl des entsprechenden Einsatzes als ein Teil für einen Diesel- oder einen Benzinmotor erst im spätestmöglichen Zeitpunkt zu treffen. Die erfindungsgemäße Ausbildung des Einsatzes mit Mitteln zu seiner translatorischen Einführung in das Einfüllrohr, mit Anschlagmitteln und mit Mitteln zum Arretieren desselben in diesem Einfüllrohr ohne die Verwendung zusätzlicher Abdichtungselemente erlaubt ein Einsetzen des Teiles in das Einfüllrohr ohne nachfolgende Abgastests, es ist dabei das Abgasverhalten gegenüber bekannten Lösungen insbesondere wegen des Wegfalls eines Teiles der Abgasabführungen vorteilhaft. Durch diese Unabhängigkeit des erfindungsgemäßen Einsatzes von nachfolgenden Abgastests wird dessen Flexibilität deutlich erhöht. Gegenüber den bekannten Lösungen mit einem auf das Rohrende aufsetzbaren Plastik- Aufsatz ergibt sich ein wesentlich vereinfachter Aufbau des Einsatzes, weiterhin ergibt sich gegenüber der aus der AT 005 686 U1 bekannten Lösung insbesondere ein wesentlich einfacheres Einsetzen des Einsatzes in das Einfüllrohr eben durch eine einfache Translationsbewegung mit abschließender Verrastung gegenüber der beschriebenen Verdrehbewegung der einzelnen Gewindesegmente gegeneinander mit abschließender Fixierung in Längsrichtung und in Verdrehrichtung. Der erfindungsgemäße Einsatz genügt im übrigen aber auch hinsichtlich seiner Funktionseigenschaften, der Zuverlässigkeit und der Lebensdauer vollkommen den bestehenden Anforderungen.

Bei der bevorzugten Ausführungsform der vorliegenden Erfindung sind die Mittel zur translatorischen Einführung des Einsatzes in das Einfüllrohr als wenigstens zwei im wesentlichen in axialer Richtung des Einsatzes verlaufende Linearführungen ausgebildet. Dies ist eine konstruktiv einfache, leicht herstellbare und funktionsgerechte Lösung. Dabei empfiehlt es sich, daß die beiden im wesentlichen in axialer Richtung des Einsatzes verlaufenden Linearführungen zum Zusammenwirken mit zueinander diametral gegenüberliegend an der Rohrinnenseite angeordneten Führungsnuten wulstartig ausgebildet sind. Die translatorische Bewegung des Einsatzes in dem Einfüllrohr erfolgt also durch die beiden in entgegengesetzte Führungsnuten an der Rohrinnenseite eingreifende wulstartige Linearführungen, es ist dadurch eine sichere lineare Führung des Einsatzes in dem Einfüllrohr gewährleistet.

Es empfiehlt sich nach einem weiteren Ausgestaltungsmerkmal der vorliegenden Erfindung, daß die Anschlagmittel zur Begrenzung der Einführbewegung des Einsatzes in das Einfüllrohr als wenigstens ein im wesentlichen in Umfangsrichtung des Einsatzes verlaufendes Anschlagelement ausgebildet sind. Durch dieses Anschlagelement wird die Einführbewegung des Einsatzes in das Einfüllrohr bei Erreichen der Endposition mit einfachen Mitteln gestoppt. In bevorzugter Ausgestaltung ist dabei das wenigstens eine im wesentlichen in Umfangsrichtung des Einsatzes verlaufende Anschlagelement dem Öffnungsbereich des Einsatzes benachbart angeordnet, dadurch ergibt sich eine längst mögliche Einführbewegungsstrecke. Es empfiehlt sich dabei, daß das wenigstens eine im wesentlichen in Umfangsrichtung des Einsatzes verlaufende Anschlagelement wulstartig ausgebildet ist.

Nach einem weiteren Ausgestaltungsmerkmal der vorliegenden Erfindung ist vorgesehen, daß die Mittel zum Arretieren des Einsatzes in dem Einfüllrohr diametral gegenüberliegend zu dem wenigstens einen im wesentlichen in Umfangsrichtung des Einsatzes verlaufenden Anschlagelement an dem Einsatz angeordnet sind. Dabei ist bei der bevorzugten Ausführungsform vorgesehen, daß die Mittel zum Arretieren des Einsatzes in dem Einfüllrohr im wesentlichen durch wenigstens einen Schnappverschluß gebildet sind. Durch diese Ausgestaltung wird erreicht, daß nach Erreichen der Endposition des Einsatzes in dem Einfüllrohr der auf der Gegenseite des Anschlagelementes befindliche Schnappverschluß praktisch gleichzeitig einrastet und dadurch der Einsatz gegen ein Herausziehen aus dem Einfüllrohr gesichert ist.

Zweckmäßig ist es nach einem weiteren Ausgestaltungsmerkmal der vorliegenden Erfindung, daß die Einrichtung zur Entlüftung des zu befüllenden Tankes zur Entlüftung in den zwischen dem Einfüllrohr und dem Einsatz befindlichen Raum ausgebildet ist. Dies ist eine in konstruktiver Hinsicht einfache und vorteilhafte Lösung. Dabei empfiehlt es sich nach einem letzten Merkmal der vorliegenden Erfindung, daß die Einrichtung zur Entlüftung des zu befüllenden Tankes im wesentlichen als eine auf dem Umfangsbereich des Einsatzes befindliche Entlüftungsöffnung ausgebildet ist.

Die Erfindung ist in den Figuren der Zeichnung in einem Ausführungsbeispiel dargestellt. Es zeigen:
- Fig. 1: eine schematische, perspektivische Darstellung des erfindungsgemäßen Einsatzes für den Einbau in ein Einfüllrohr z. B. für einen Treibstofftank,
- Fig.2: eine schematische, perspektivische seitliche Darstellung des erfindungsgemäßen Einsatzes für ein Einfüllrohr.

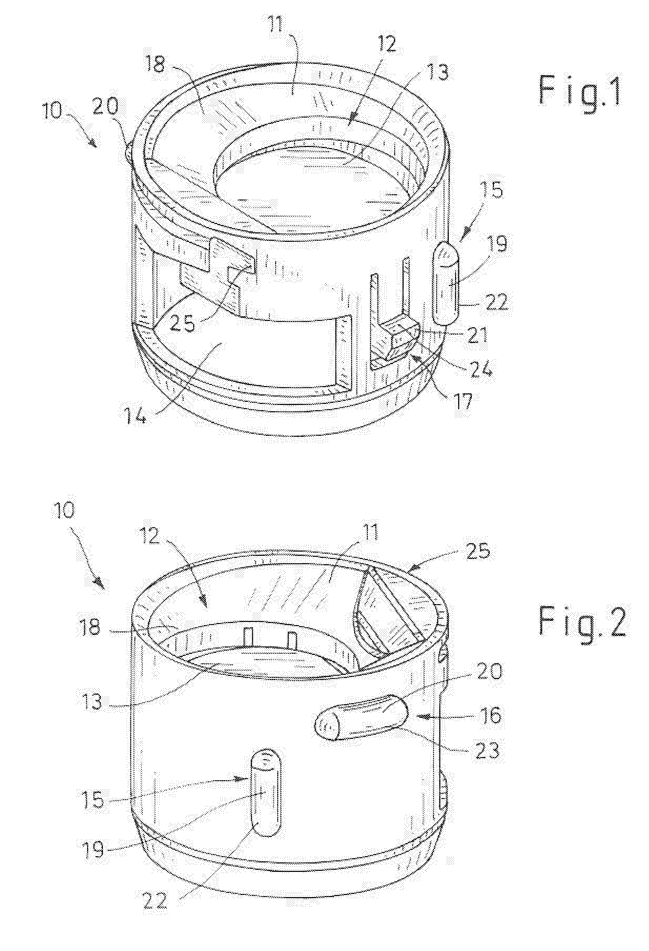

Der erfindungsgemäße Einsatz für den Einbau in ein Einfüllrohr z. B. für einen Treibstofftank ist generell mit 10 bezeichnet. Der Einsatz 10 ist vorgesehen für den Einbau in ein endseitig eine Aufnahme für z. B. einen Verschlußstopfen aufweisendes Einfüllrohr z. B. für einen Treibstofftank. Es ist dazu in der Fig. 1 der Zeichnung der erfindungsgemäße Einsatz 10 für ein Einfüllrohr in einer schematischen, perspektivischen Darstellung gezeigt und in der Fig. 2 der Zeichnung in einer ähnlichen, etwas mehr seitlichen Darstellung. Das endseitig eine Aufnahme für z. B. einen Verschlußstopfen aufweisende Einfüllrohr z. B. für einen Treibstofftank kann eine an sich bekannte Ausgestaltung aufweisen, und ist in den Figuren der Zeichnung deshalb nicht dargestellt.

Der erfindungsgemäße Einsatz 10 für ein Einfüllrohr umfaßt, siehe z. B. die Fig. 1 der Zeichnung, mit 11 bezeichnete Mittel zur selektiven Aufnahme eines hier nicht dargestellten Mundrohres z. B. einer Zapfpistole, der Einsatz 10 umfaßt weiterhin eine in den durchmesserreduzierbar ausgebildeten Öffnungsbereich 12 des Einsatzes 10 schwenkbare Erdungs- Klappeneinrichtung 13, die in an sich bekannter Weise schwenkbar an dem erfindungsgemäßen Einsatz 10 gelagert ist und zur Erdung dient, um beim Zünden entstehende Funken abzuleiten bzw. erst gar nicht entstehen zu lassen. Die schwenkbare Erdungs- Klappeneinrichtung 13 weist dazu in bekannter Weise einen zur Erdung dienenden, mit 25 bezeichneten Winkelanschluß auf. Der Einsatz 10 umfaßt ferner eine Einrichtung 14 zur Entlüftung des zu befüllenden Tankes, Mittel 15 zur Steuerung der Einführbewegung des Einsatzes 10 in das Einfüllrohr, Mittel 16 zur Begrenzung der Einführbewegung des Einsatzes 10 in das Einfüllrohr und Mittel 17 zum Festlegen desselben in diesem Einfüllrohr. Die Ausbildung dieser zuletzt genannten Merkmale wird nachfolgend im einzelnen erläutert.

Um bei dieser Anordnung insbesondere eine Vereinfachung des Aufbaus, des Einbaus bzw. der Austauschbarkeit des Einsatzes 10 zu erreichen, ist erfindungsgemäß vorgesehen, siehe dazu neben der Fig. 1 insbesondere auch die Fig. 2 der Zeichnung, daß der Einsatz 10 als ein mit wenigstens zwei möglichen unterschiedlichen Bohrungsdurchmessern ausgestatteter Einsatz 10 insbesondere aus Plastik ausgebildet ist, mit einem in dem Öffnungsbereich 12 befestigten, mit der schwenkbaren Erdungs- Klappeneinrichtung 13 in Wirkverbindung stehenden, durchmesserreduzierenden Führungselement 18 für das Mundrohr, siehe insbesondere Fig. 1, und daß der Einsatz 10 mit Mitteln 19 zu seiner translatorischen Einführung in das Einfüllrohr, mit Anschlagmitteln 20 und mit Mitteln 21 zum Arretieren desselben in diesem Einfüllrohr versehen ist. Bezüglich der Ausbildung der Anschlagmitteln 20 sei dazu auf die Fig. 2 und bezüglich der Ausbildung der Mitteln 21 zum Arretieren des Einsatzes 10 in dem Einfüllrohr sei auf die Fig. 2 der Zeichnung verwiesen. Mit dieser Ausbildung wird insbesondere eine Vereinfachung und dadurch Verbesserung des Aufbaus, des Einbaus und der Austauschbarkeit des Einsatzes 10 erreicht:

Der als ein mit wenigstens zwei möglichen unterschiedlichen Bohrungsdurchmessern ausgestatteter Einsatz 10 insbesondere aus Plastik ausgebildete Einsatz 10 für ein Einfüllrohr mit einem in dem Öffnungsbereich 12 befestigten durchmesserreduzierenden Führungselement 18 für das Mundrohr ist gegenüber den zuvor bekannten Lösungen wesentlich kostengünstiger, wobei insbesondere durch die Einsparung zusätzlicher Abdichtungselemente zwischen Einsatzelement und Einfüllrohr Kosten gespart werden. Weiterhin wird gegenüber bekannten durchmesserreduzierenden Führungselementen aus Metall der Vorteil erreicht, daß bei diesen Ausführungen im Vergleich die technische Ausführbarkeit sehr schwierig ist, außerdem sehen diese Anordnungen nicht die Möglichkeit vor, eine Auswahl des entsprechendes Einsatzes als ein Teil für einen Diesel- oder einen Benzinmotor erst im spätestmöglichen Zeitpunkt zu treffen. Im vorliegenden Falle ist dabei eine Benzinmotor- Ausführung mit hier nicht separat bezeichneter Bleisperre dargestellt. Die erfindungsgemäße Ausbildung des Einsatzes 10 mit Mitteln 19 zu seiner translatorischen Einführung in das Einfüllrohr, mit Anschlagmitteln 20 und mit Mitteln 21 zum Arretieren desselben in diesem Einfüllrohr ohne die Verwendung zusätzlicher Abdichtungselemente erlaubt ein Einsetzen des Teiles in das Einfüllrohr ohne nachfolgende Abgastests, es ist dabei das Abgasverhalten gegenüber bekannten Lösungen insbesondere wegen des Wegfalls eines Teiles der Abgasabführungen vorteilhaft. Durch diese Unabhängigkeit des erfindungsgemäßen Einsatzes 10 von nachfolgenden Abgastests wird dessen Flexibilität deutlich erhöht. Gegenüber den bekannten Lösungen mit einem auf das Rohrende aufsetzbaren Plastik- Aufsatz ergibt sich ein wesentlich vereinfachter Aufbau des Einsatzes, weiterhin ergibt sich gegenüber der aus der AT 005 686 U1 bekannten Lösung insbesondere ein wesentlich einfacheres Einsetzen des Einsatzes 10 in das Einfüllrohr eben durch eine einfache Translationsbewegung mit abschließender Verrastung gegenüber der beschriebenen Verdrehbewegung der einzelnen Gewindesegmente gegeneinander mit abschließender Fixierung in Längsrichtung und in Verdrehrichtung. Der erfindungsgemäße Einsatz 10 genügt im übrigen aber auch hinsichtlich seiner Funktionseigenschaften, der Zuverlässigkeit und der Lebensdauer vollkommen den bestehenden Anforderungen.

Die Mittel 19 zur translatorischen Einführung des Einsatzes 10 in das Einfüllrohr sind vorliegend, siehe die Fig. 1 und 2 der Zeichnung, als zwei im wesentlichen in axialer Richtung des Einsatzes 10 verlaufende Linearführungen 22 ausgebildet. Dabei sind diese beiden im wesentlichen in axialer Richtung des Einsatzes 10 verlaufenden Linearführungen 22 zum Zusammenwirken mit zueinander diametral gegenüberliegend an der Rohrinnenseite angeordneten Führungsnuten wulstartig ausgebildet. Die translatorische Bewegung des Einsatzes 10 in dem Einfüllrohr erfolgt also durch die beiden in entgegengesetzte Führungsnuten an der Rohrinnenseite eingreifende wulstartige Linearführungen 22, es ist dadurch eine sichere lineare Führung des Einsatzes 10 in dem Einfüllrohr gewährleistet.

Die Anschlagmittel 20 zur Begrenzung der Einführbewegung des Einsatzes 10 in das Einfüllrohr sind, siehe wieder die Fig. 2, als ein im wesentlichen in Umfangsrichtung des Einsatzes 10 verlaufendes Anschlagelement 23 ausgebildet. Durch dieses Anschlagelement 23 wird die Einführbewegung des Einsatzes 10 in das Einfüllrohr bei Erreichen der Endposition gestoppt. Dabei ist das im wesentlichen in Umfangsrichtung des Einsatzes 10 verlaufende Anschlagelement 23 dem Öffnungsbereich 12 des Einsatzes 10 benachbart angeordnet, dadurch ergibt sich eine längst mögliche Einführbewegungsstrecke. Es ist dabei das Anschlagelement 23 bei der dargestellten Ausführungsform wulstartig ausgebildet.

Die Mittel 21 zum Arretieren des Einsatzes 10 in dem Einfüllrohr sind bei der dargestellten Ausführungsform, siehe Fig. 1, diametral gegenüberliegend zu dem im wesentlichen in Umfangsrichtung des Einsatzes 10 verlaufenden Anschlagelement 23 an dem Einsatz 10 angeordnet. Dabei sind diese Mittel 21 zum Arretieren des Einsatzes 10 in dem Einfüllrohr im wesentlichen durch einen Schnappverschluß 24 gebildet. Durch diese Ausgestaltung wird erreicht, daß nach Erreichen der Endposition des Einsatzes 10 in dem Einfüllrohr der auf der Gegenseite des Anschlagelementes 23 befindliche Schnappverschluß 24 praktisch gleichzeitig einrastet und dadurch der Einsatz 10 gegen ein Herausziehen aus dem Einfüllrohr gesichert ist.

Die Einrichtung 14 zur Entlüftung des zu befüllenden Tankes ist, siehe wieder die Fig. 1, zur Entlüftung in den zwischen dem Einfüllrohr und dem Einsatz 10 befindlichen Raum ausgebildet, dabei ist diese Einrichtung 14 zur Entlüftung des zu befüllenden Tankes im wesentlichen als eine auf dem Umfangsbereich des Einsatzes 10 befindliche Entlüftungsöffnung 25 ausgebildet.

Durch den erfindungsgemäß ausgebildeten Einsatz 10 wird insbesondere der Aufbau, der Einbau und die Austauschbarkeit des Einsatzes 10 wesentlich vereinfacht und dadurch auch wesentlich verbessert. Der erfindungsgemäße Einsatz 10 bietet dabei insbesondere die Möglichkeit, eine Auswahl des entsprechendes Einsatzes 10 z. B. als ein Teil für einen Diesel- oder einen Benzinmotor erst im spätestmöglichen Zeitpunkt zu treffen. Es wird dabei der erfindungsgemäße Einsatz 10 in einfacher Weise durch eine einfache Translationsbewegung mit abschließender Verrastung in dem Einfüllrohr eingesetzt. Der erfindungsgemäße Einsatz 10 weist dazu in der dargestellten Ausführungsform zwei im wesentlichen in axialer Richtung des Einsatzes 10 verlaufenden Linearführungen 22 zum Zusammenwirken mit zueinander diametral gegenüberliegend an der Rohrinnenseite angeordneten Führungsnuten auf, es wird auf diese Weise eine sichere, lineare Führung des Einsatzes 10 in dem Einfüllrohr gewährleistet. Bei Erreichen der Endposition wird dabei durch das im wesentlichen in Umfangsrichtung des Einsatzes 10 verlaufende Anschlagelement 23 die Einführbewegung des Einsatzes 10 in das Einfüllrohr gestoppt. Nach Erreichen der Endposition des Einsatzes 10 in dem Einfüllrohr rastet praktisch gleichzeitig der auf der Gegenseite des Anschlagelementes 23 befindliche Schnappverschluß 24 ein und sichert dadurch den Einsatz 10 gegen ein Herausziehen aus dem Einfüllrohr. Die Tankentlüftung wird dabei durch die auf dem Umfangsbereich des Einsatzes 10 befindliche Entlüftungsöffnung 25 sichergestellt.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann insbesondere der Einsatz 10 eine von den dargestellten Ausführungsformen abweichende konstruktive Ausbildung aufweisen, weiterhin denkbar ist außerdem insbesondere eine abweichende Ausbildung oder Anordnung der Mitteln 19 zu seiner translatorischen Einführung in das Einfüllrohr, der Anschlagmitteln 20 und der Mitteln 21 zum Arretieren desselben in diesem Einfüllrohr.

### BEZUGSZEICHENLISTE

- 10: Einsatz für Einfüllrohr
- 11: Mittel zur Aufnahme eines Mundrohres
- 12: Öffnungsbereich (von 10 für Mundrohr)
- 13: Erdungs- Klappeneinrichtung
- 14: Einrichtung zur Tankentlüftung
- 15: Mittel zur Steuerung der Einführbewegung von 10
- 16: Mittel zur Begrenzung der Einführbewegung von 10
- 17: Mittel zum Festlegen von 10
- 18: durchmesserreduzierendes Führungselement von 10 für Mundrohr
- 19: Mittel zur translatorischen Einführung von 10
- 20: Anschlagmittel (von 10)
- 21: Mittel zum Arretieren von 10
- 22: Linearführung (an 10)
- 23: Anschlagelement (an 10)
- 24: Schnappverschluß (an 10)
- 25: Entlüftungsöffnung (an 10)
- 26: Winkelanschluß an 13 (zur Erdungsableitung)

## Patentansprüche

1. Einsatz (10) für den Einbau in ein endseitig eine Aufnahme für z.B. einen Verschlußstopfen aufweisendes Einfüllrohr z.B. für einen Treibstofftank, mit Mitteln (11) zur selektiven Aufnahme des Mundrohres z.B. einer Zapfpistole, mit einer in den durchmesserreduzierbar ausgebildeten Öffnungsbereich (12) des Einsatzes (10) schwenkbaren Erdungs- Klappeneinrichtung (13), mit einer Einrichtung (14) zur Entlüftung des zu befüllenden Tankes, mit Mitteln (15) zur Steuerung der Einführbewegung des Einsatzes (10) in das Einfüllrohr, mit Mitteln (16) zur Begrenzung der Einführbewegung des Einsatzes (10) in das Einfüllrohr und mit Mitteln (17) zum Festlegen desselben in diesem Einfüllrohr,
**dadurch gekennzeichnet, daß**
der Einsatz (10) als ein mit wenigstens zwei möglichen unterschiedlichen Bohrungsdurchmessern ausgestatteter Einsatz (10) insbesondere aus Plastik ausgebildet ist, mit einem in dem Öffnungsbereich (12) befestigten, mit der schwenkbaren Erdungs- Klappeneinrichtung (13) in Wirkverbindung stehenden, durchmesserreduzierenden Führungselement (18) für das Mundrohr, und daß der Einsatz (10) mit Mitteln (19) zu seiner translatorischen Einführung in das Einfüllrohr, mit Anschlagmitteln (20) und mit Mitteln (21) zum Arretieren desselben in diesem Einfüllrohr versehen ist.

2. Einsatz für den Einbau in ein Einfüllrohr nach Anspruch 1,
**dadurch gekennzeichnet, daß**
die Mittel (19) zur translatorischen Einführung des Einsatzes (10) in das Einfüllrohr als wenigstens zwei im wesentlichen in axialer Richtung des Einsatzes (10) verlaufende Linearführungen (22) ausgebildet sind.

3. Einsatz für den Einbau in ein Einfüllrohr nach Anspruch 1 oder 2,
**dadurch gekennzeichnet, daß**
die beiden im wesentlichen in axialer Richtung des Einsatzes (10) verlaufenden Linearführungen (22) zum Zusammenwirken mit zueinander diametral gegenüberliegend an der Rohrinnenseite angeordneten Führungsnuten wulstartig ausgebildet sind.

4. Einsatz für den Einbau in ein Einfüllrohr nach einem der Ansprüche 1 bis 3,
**dadurch gekennzeichnet, daß**
die Anschlagmittel (20) zur Begrenzung der Einführbewegung des Einsatzes (10) in das Einfüllrohr als wenigstens ein im wesentlichen in Umfangsrichtung des Einsatzes (10) verlaufendes Anschlagelement (23) ausgebildet sind.

5. Einsatz für den Einbau in ein Einfüllrohr nach Anspruch 4,
**dadurch gekennzeichnet, daß**
das wenigstens eine im wesentlichen in Umfangsrichtung des Einsatzes (10) verlaufende Anschlagelement (23) dem Öffnungsbereich (12) des Einsatzes (10) benachbart angeordnet ist.

6. Einsatz für den Einbau in ein Einfüllrohr nach Anspruch 4 oder 5,
**dadurch gekennzeichnet, daß**
das wenigstens eine im wesentlichen in Umfangsrichtung des Einsatzes (10) verlaufende Anschlagelement (23) wulstartig ausgebildet ist.

7. Einsatz für den Einbau in ein Einfüllrohr nach einem der Ansprüche 1 bis 6,
**dadurch gekennzeichnet, daß**
die Mittel (21) zum Arretieren des Einsatzes (10) in dem Einfüllrohr diametral gegenüberliegend zu dem wenigstens einen im wesentlichen in Umfangsrichtung des Einsatzes (10) verlaufenden Anschlagelement (23) an dem Einsatz (10) angeordnet sind.

8. Einsatz für den Einbau in ein Einfüllrohr nach einem der Ansprüche 1 bis 7,
**dadurch gekennzeichnet, daß**
die Mittel (21) zum Arretieren des Einsatzes (10) in dem Einfüllrohr im wesentlichen durch wenigstens einen Schnappverschluß (24) gebildet sind.

9. Einsatz für den Einbau in ein Einfüllrohr nach einem der Ansprüche 1 bis 8,
**dadurch gekennzeichnet, daß**
die Einrichtung (14) zur Entlüftung des zu befüllenden Tankes zur Entlüftung in den zwischen dem Einfüllrohr und dem Einsatz (10) befindlichen Raum ausgebildet ist.

10. Einsatz für den Einbau in ein Einfüllrohr nach Anspruch 9,
**dadurch gekennzeichnet, daß**
die Einrichtung (14) zur Entlüftung des zu befüllenden Tankes im wesentlichen als eine auf dem Umfangsbereich des Einsatzes (10) befindliche Entlüftungsöffnung (25) ausgebildet ist.
